# EUROPEAN PATENT SPECIFICATION

(11) **EP 3 686 468 B1**
(45) Date of publication and mention of the grant of the patent: **21.05.2025**
(21) Application number: 20152215.8
(22) Date of filing: 16.01.2020
(51) Int. Cl.: F16L 3/10

(54) **A PIPE CLIP FOR ATTACHING A PIPE OR A SIMILAR OBJECT TO A SUPPORT**
ROHRKLEMME ZUR BEFESTIGUNG EINES ROHRES ODER EINES ÄHNLICHEN OBJEKTS AN EINEM TRÄGER
PINCE DE TUYAU POUR FIXER UN TUYAU OU UN OBJET SIMILAIRE SUR UN SUPPORT

(30) Priority: 22.01.2019 NL 2022434
(43) Date of publication of application: 29.07.2020
(73) Proprietor: CoxGeelen B.V., 6245 HZ Eijsden (NL)
(72) Inventor: AARTS, Martijn Anne Johan Lambert, 6245 HZ EIJSDEN (NL); LUX, Gene Twan Edgar, 6245 HZ EIJSDEN (NL)
(74) Representative: Algemeen Octrooi- en Merkenbureau B.V.

(56) References cited:
- EP-A1- 0 352 438
- WO-A1-97/37164
- WO-A1-99/08032
- US-A- 4 172 578
- US-A- 5 462 246
- US-A1- 2006 006 292

## Description

The invention relates to a pipe clip for attaching a pipe or a similar object to a support, the pipe clip comprises two clip segments which are connected to each other by means of at least one hingeable section of the pipe clip, wherein each end of the two clip segments remote from the at least one hingeable section comprises a connection section which connection sections are configured to be connected with each other for connecting the pipe clip around a pipe or a similar object.

The invention further relates to a system comprising such a pipe clip and also to a method for attaching such a pipe clip to a support.

WO99/08032 discloses a pipe clip for attaching a pipe or a similar object to a support. The pipe clip comprises two clip segments which are connected to each other by means of two hingeable sections, i.e. pivot joints, and a base part of the pipe clip. The pivot joints are made from a different material than the base part and the clip segments. Each end of the two clip segments remote from the pivot joints comprises a connection section which connection sections are configured to be connected with each other for connecting the pipe clip around a pipe or a similar object. The known pipe clip has a design which makes it relatively difficult to attach the pipe clip to a support in a flexible manner. In addition, the construction of the pipe joints with the base part provides a pipe clip having a relatively large size.

The documents US 2006/006292 A1, WO 97/37164 A1, US 4.172.578 A and US 5.462.246 A disclose a pipe clip for attaching a pipe to a support and these pipe clips comprise two segments which are connected to each other by means of a hinge. The preamble of claim 1 is based on US 4.172.578 A.

It is an object to provide an improved pipe clip with relatively compact dimensions and/or to provide a pipe clip that can be attached to a support in a relatively simple, flexible and quick manner.

At least one of these objects is achieved by a pipe clip as defined in claim 1.

The pipe clip for attaching a pipe or a similar object to a support comprises two clip segments which are connected to each other by means of at least one hingeable section of the pipe clip. Each end of the two clip segments remote from the at least one hingeable section comprises a connection section which connection sections are configured to be connected with each other for connecting the pipe clip around a pipe or a similar object. Opposite ends of the two clip segments are connected to the at least one hingeable section, wherein each opposite end comprises an outwardly extending flange comprising at least one hole. The at least one hole of one of the two flanges is alignable by means of the at least one hingeable section with the at least one hole of the other of the two flanges for receiving a fastener element through the two holes for attaching a pipe or a similar object to a support.

The design of this pipe clip is improved in that the pipe clip can easily be connected around a pipe for connecting the pipe clip around the pipe and that the pipe clip can be attached to a support in a relatively simple and flexible manner. The latter is advantageously achieved by the configuration of the flanges with the alignable holes which makes it possible to use a fastener element which can be passed through the two holes before attaching the pipe clip to a support by means of the fastener element. The support may be for example a wall. In addition, by connecting the ends of the clip segments to the hingeable section of the pipe clip and by providing the flanges with the holes it is possible to obtain a relatively compact design.

According to the invention, the hingeable section comprises at least two hinge portions connected to each other by a connecting element, preferably the connecting element comprises inwardly extending supporting flanges arranged to be positioned against a pipe to be attached to a support.

This configuration of the hingeable section provides the desired flexibility for opening the clip segments and positioning the clip segments around the pipe. In addition, the connecting element provides support and stability when the pipe clip is attached around the pipe. The connecting element has an outwardly extending portion comprising a receiving member for receiving the fastener element. The receiving member may provide additional stability when the pipe clip is attached by the fastener element to a support. The connection with the fastener element may be further improved by an inner surface of the receiving member comprising at least one threaded surface portion. Further, it is possible that an inner surface of each hole for receiving the fastener element comprises at least a threaded inner surface portion to improve the connection between the pipe clip and the fastener element.

Further, it is possible to manufacture the hingeable section from the same material as the clip segments, for example the hingeable section may comprise one or a number of living hinges or the like. In fact, it is possible to manufacture all the structural components as discussed in this document (including the claims) of the pipe clip from one plastic material.

In a further aspect, each flange of the pipe clip comprises a further hole for receiving a fastener element. This further hole can be used for attaching the pipe clip to a support by more than one fastener element. It is also possible that the further hole is configured for receiving a different type of fastener element, such that an operator is able to choose which type of fastener element to be used or which type of fastener element is more preferred and/or available. Hence, by providing a pipe clip configured to be used with more than one type of fastener element, the pipe clip may also become more universal applicable. In other words, in specific countries or regions of the world a first type of fastener element may be more common to be used than in other countries or regions where it is more common to use a second type of fastener. By providing a clip flip compatible with both types of fastener elements no special variant for each type of fastener element for each country/region needs to be manufactured.

In each flange the center lines of the hole and the further hole may extend substantially parallel, preferably the center lines define a virtual plane extending substantially perpendicular to the outwardly extending flange. By this arrangement of the two holes in the flange, the desired hole or holes to be used by an operator can be identified easily and used more or less in the same manner by an operator. In addition, each of the two holes is easily accessible for an operator as a result of the flange construction of the pipe clip.

In another aspect, each connection section comprises a first portion having an outer connection element and a second portion having an inner connection element, wherein for connecting the connection sections the outer connection elements are connected over the inner connection elements. This configuration of the connection section provides a relatively reliable and strong connection for attaching the pipe clip to the pipe.

It is further an object to provide a system that can be attached to a support in a relatively simple and quick manner.

This object is achieved by the system as defined in claim 11.

The system comprises a pipe clip as disclosed in this document and a fastener element. The fastener element may comprise an outer surface comprising at least a threaded outer surface section. Such a system can be attached by means of the fastener element to a support in a relatively simple and quick manner

In one aspect of the system, a diameter d1 of the holes through which the fastener element is to be positioned is smaller than the diameter d2 of the fastener element. The diameter d1 may be 5-20% smaller than diameter d2. By using such a fastener element a relatively strong and reliable connection between the flanges and the fastener element can be obtained. Such a connection does not require any additional support means. The fastener element may be a frame screw (in the Dutch language known as "kozijnschroef"). It is also possible to use fastener elements having a thread-forming self-tapping screw, such that it is not required to provide a thread in the holes of the flanges.

In addition or as an alternative, the fastener element comprise a standard screw thread section, for example a metric screw thread section ("M" series threads).

It is further an object to provide a method for attaching a pipe clip to a support in a relatively simple and quick manner.

This object is achieved by the method as defined in claim 13. A fastener element can be beneficially used for attaching a pipe clip to a support in a relatively simple and quick manner. Preferably, a threaded fastener element is able to provide an effective connection between the pipe clip and the fastener element, in particular if the holes/receiving member and the fastener element comprise a standard screw thread section, for example a metric screw thread section ("M" series threads) and/or if the holes and the fastener element comprise a diameter d1 of the holes through which the fastener element is to be positioned which is smaller than the diameter d2 of the fastener element.

The present invention will be explained in more detail below with reference to the appended figures showing exemplary embodiments, in which:
Figures 1a-d are perspective views and top views of a pipe clip;
Figure 2 is a perspective view of a first embodiment of the system;
Figures 3a,3b are top views of the first embodiment of the system shown in figure 2;
Figure 4 is a perspective view of a second embodiment of the system;
Figures 5a, 5b are top views of the second embodiment of the system shown in figure 4.

In the following description identical or corresponding parts have identical or corresponding reference numerals. Each feature disclosed with reference to a specific figure can also be combined with another feature disclosed in this disclosure, unless it is evident for a person skilled in the art that these features are incompatible.

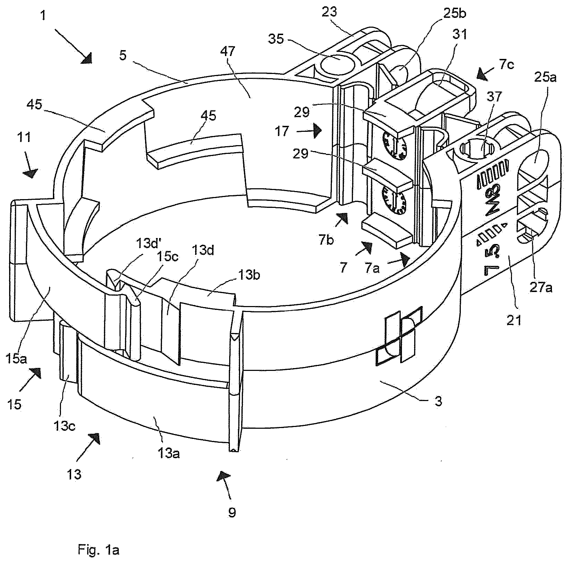

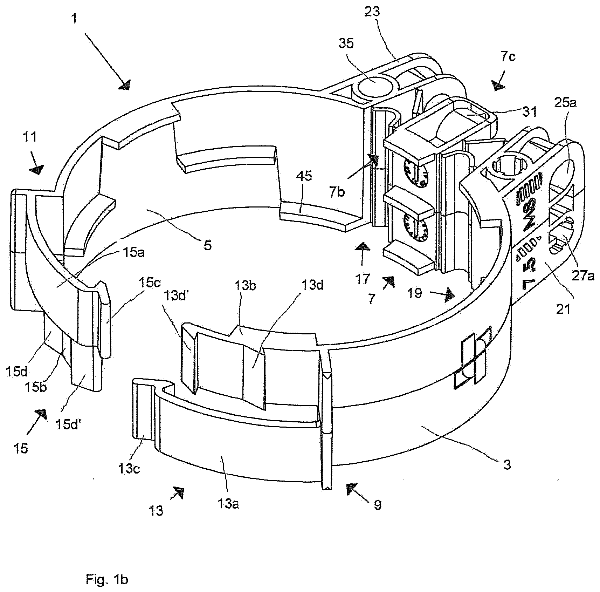

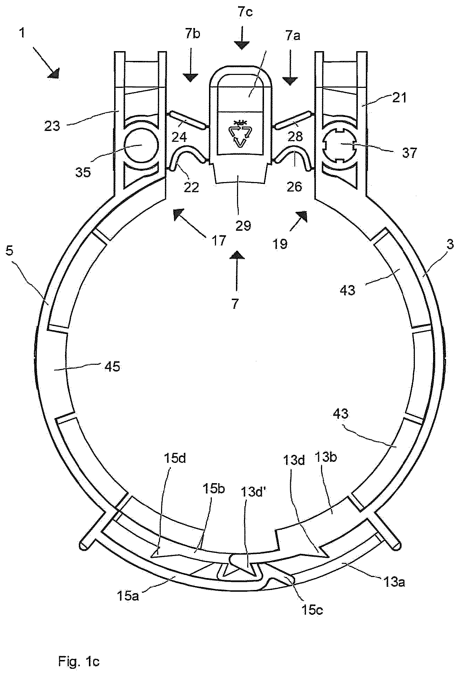

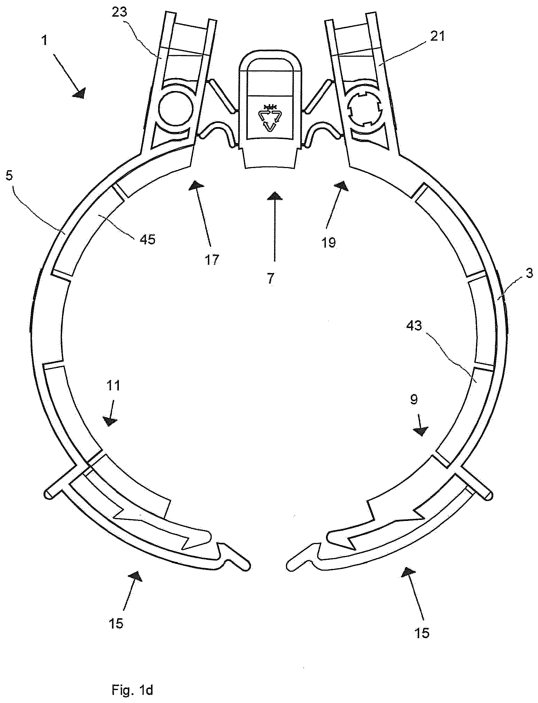

Figures 1a-d are perspective views and top views of a pipe clip 1 for attaching a pipe (not shown) or a similar object to a support (not shown). Figures 1a and 1c show the pipe clip in a closed state and figures 1b and 1d show the pipe clip in an open state. In the open state the pipe clip 1 can be connected around a pipe. The pipe clip 1 comprises two clip segments 3, 5 which are connected to each other by means of a hingeable section 7 of the pipe clip 1. Each end 9, 11 of the two clip segments 3, 5 at a distance (remote) from the at least one hingeable section 7 comprises a connection section 13, 15. The connection sections 13, 15 are configured to be connected with each other for connecting the pipe clip 1 around a pipe or a similar object. In figures 1a, 1c the connection sections 13, 15 are connected to each other (closed state), wherein in figures 1b, 1d the connections sections 13, 15 are not connected to each other (open state).

Opposite ends 17, 19 of the two clip segments 3, 5 are connected to the hingeable section 7, wherein each opposite end 17, 19 comprises an outwardly extending flange 21, 23 comprising at least one hole 25a, 25b, i.e. in the embodiment shown in figures 1a-d each flange 21, 23 has a further hole 27a (the second hole in the flange 23 is not visible in the figures 1a-1d). The holes 25a, 27a of one 21 of the two flanges are alignable by means of the hingeable section 7 with the corresponding holes 25b of the other 23 of the two flanges for receiving a fastener element (not shown in figures 1a-d) through the two holes 25a, 25b for attaching a pipe or a similar object to a support.

The pipe clip 1 shown in figures 1a-d has relatively compact dimensions and is easy to handle during installation such that the pipe clip 1 can be attached to a support by means of a fastener element as will be discussed below in a relatively simple, flexible and quick manner.

In each flange 21, 23 the center lines of the hole 25a and the further hole 27a extend substantially parallel. These center lines of the holes 25a, 27a further define a virtual plane extending substantially perpendicular to the flange 21, 23. Each flange 21, 23 extends seen from the center line of the pipe clip 1 in an outward direction from each opposite end 17, 19. The segments 3, 5 and the hingeable section 7 define in the closed state a pipe clip 1 having approximately the shape of a cylinder.

As can be seen in figures 1a-d the flanges 21, 23 of the pipe clip 1 further comprise additional through holes 35, 37 extending through the flange 21, 23 in a direction parallel to the center line of the pipe clip 1. These through holes 35, 37 are optional and may provide additional attachment options for fastener elements (not shown) to be used by an operator for attaching a pipe clip 1 to a support or object if desired.

The hingeable section 7 comprises two hinge portions 7a, 7b connected to each other by a connecting element 7c. Each hinge portion 7a, 7b may have two hinge elements 22, 24, 26, 28 (fig. 1c) which may be constructed as a living hinge. The connecting element 7c comprises inwardly extending supporting flanges 29 which are vertically spaced and arranged to be positioned against a pipe to be attached to a support. The connecting element 7c also has an outwardly radially (seen from the center line of the pipe clip) extending portion 31 comprising a receiving member (not shown in figures 1a-d) for receiving a fastener element passed through holes 25a, 25b.

The pipe segments 3, 5 comprise inwardly directed supporting flanges 43, 45 arranged to be positioned against a pipe to be attached to a support. As can be seen in figures 1a, 1b the supporting flanges 43, 45 are spaced in a vertical and horizontal direction. The angle between an inner surface 47 of each of the pipe segments 3, 5 and the supporting flanges 43, 45 is 90 degrees.

Each connection section 13, 15 comprises a first portion having an outer connection element 13a, 15a and a second portion having an inner connection element 13b, 15b. The connection sections 13, 15 have an identical configuration for connecting the first portions with the second portions, i.e. for connecting the connection sections 13, 15 hook members 13c, 15c of the outer connection elements 13a, 15a are connected/coupled over hook members 13d, 13d', 15d, 15d' of the inner connection elements 13b, 15b. As can be seen in figure 1a, the inner connection elements 13b, 15b have two hook members 13d, 15d (fig. 1b), such that the connection sections 13, 15 can be connected with each other for connecting the pipe clip 1 around pipes having varying diameters. It is also possible that in a first step the first hook members 13d', 15d' are used, and for tighter clamping/attaching the pipe clip 1 around the pipe the second hook members 13d, 15d are used in a second step.

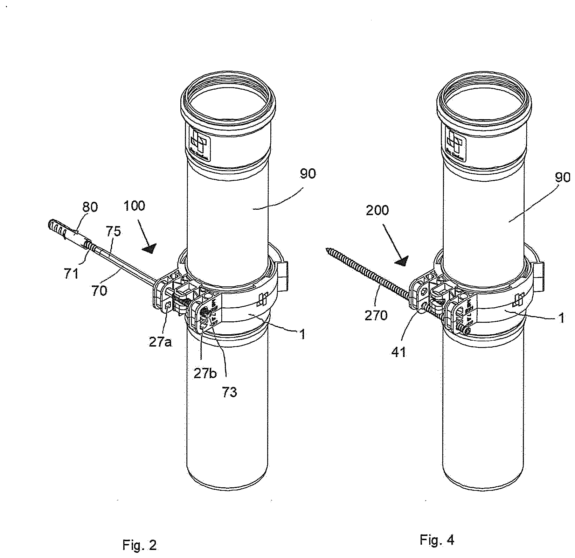

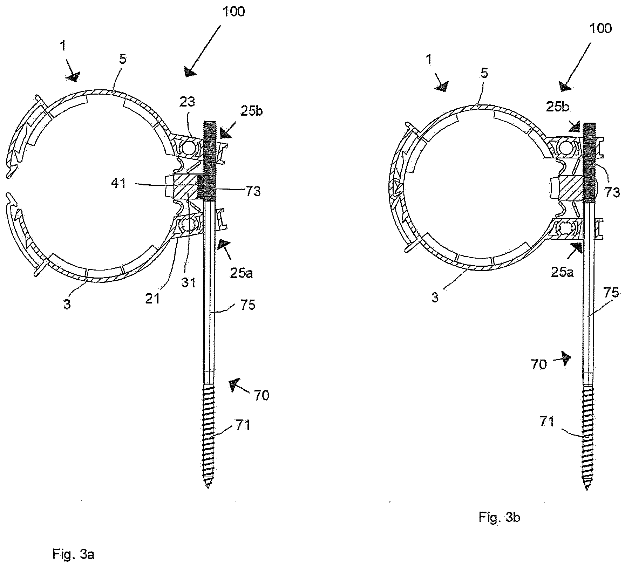

Figures 2 and 3a,3b show a first embodiment of the system 100. In figure 2 it is shown that the pipe clip 1 of the system 100 is attached around a pipe 90. The system 100 further comprises a fastener element 70, wherein the fastener element 70 comprises threaded sections 71, 73 and an intermediate section 75. In figure 2 the system 100 is connected to a support (not shown) for example a wall in which a wall plug 80 can be attached in a hole in the wall. The first threaded sections 71 is provided to cooperate with the wall plug 80 for fixing/attaching the system 100 to the wall. The second threaded section 73 is a metric screw thread section ("M" series threads), in particular a M8 screw thread section. It is also possible to use a different standard for example the Unified Thread Standard (UTS).

As can be seen best in figure 1a the flange 21 may have markings, for example M8, near the holes 25a, 27a to identify to an operator which fastener element type should preferably be used for this hole 25a, 27a. The fastener element 70 uses the (identical) holes 25a, 25b in the spaced apart flanges 21, 23.

As can be seen by comparing figures 3a and 3b the holes 25a, 25b have tapered inner walls. This configuration of the inner walls facilitates insertion of the fastener member 70 and contributes to a strong connection between the fastener member 70 and the portion of the inner wall of the holes 25a, 25b lying against the M8 screw thread section 73 of the fastener element 70. The fastener element 70 is in the closed state of the pipe clip (fig. 3b) also connected to the receiving member 41 (which is best seen in figure 4) for receiving the fastener element 70. The receiving member 41 is provided in the portion 31 of the connecting element 7c as mentioned above. Hence, in the closed state of the pipe clip 1 (shown in figure 3b), the fastener element is connected to the pipe clip 1 by means of the 25a, 25b and by means of the receiving section 41. The receiving member 41 (see figure 3a and 4) is also provided with an inner surface having a metric screw thread profile. It is also possible to provide the inner surface of the holes 25a, 25b at least partially with a metric screw thread profile (not shown).

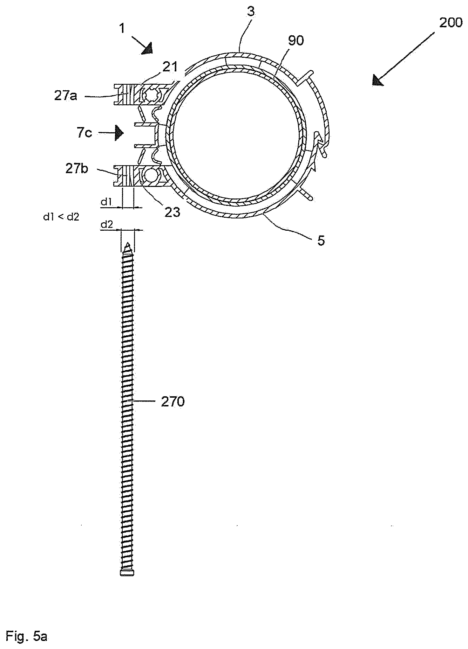

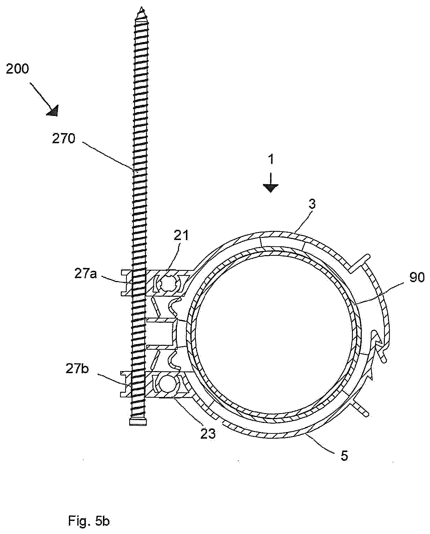

Figures 4 and 5a,5b show a second embodiment of the system 200. The difference with the system 100 is that a different type of fastener element 270 is being used to attach the pipe clip 1 connected to the pipe 90 to a support (not shown). The fastener element 270 is a threaded frame screw (in the Dutch language known as "kozijnschroef"). A further difference is that instead of the holes 25a, 25b, an operator should use the holes 27a, 27b (identified in figure 2) to attach the pipe clip 1 to the support.

As shown in figure 5a, a diameter d1 of the (identical) holes 27a, 27b through which the threaded fastener element 270 is to be positioned is smaller than the diameter d2 of the fastener element 270. The diameter d1 is for example 5-20% smaller than diameter d2. In this way a strong connection can be obtained between the fastener element 270 and pipe clip 1. In addition, the fastener element 270 can be attached to a support immediately after passing the holes 27a, 27b, such that the pipe clip 1 can be attached to the support in a relatively fast manner.

It is further possible that the segments 3, 5 and/or the connecting element 7c have a smooth inner surface, i.e. an inner surface without flanges 29, 43, 45. In certain applications of the system it may be desired that the pipe 90 is allowed to move with respect to the pipe clip 1, for example as a result of thermal expansion/contraction, wherein for such applications the segments 3, 5 and/or the connecting element 7c of the pipe clip may have a smooth inner surface, i.e. an inner surface without flanges 29, 43, 45. In other applications, it may be desired to have a fixed relation between the pipe clip 1 and the pipe 90 or the portion of the pipe 90 attached by means of the pipe clip, wherein in such applications it is also possible to include a friction increasing element, for example a rubber ring, in combination with flanges or any other configurations of the inner surface to hold the friction increasing element.

In the exemplary embodiments shown in figures 1-5b the connection sections 13, 15 are diametrically positioned with respect to the hingeable section 7, i.e. following the circumference of the pipe clip 1 at approximately 180 degrees, but other positions of the connection sections 13, 15 with respect to the hingeable section 7 are possible. For installation purposes it may be desired to position the connection sections 13, 15 closer to the hingeable section 7 for example on a position on the circumference between the connection sections 13, 15 and the hingeable section 7 as shown in the figures 1-5b, for example at a position following the circumference of the pipe clip 1 at approximately 90 (or 270) degrees.

## Claims

1. A pipe clip (1) for attaching a pipe (90) or a similar object to a support, the pipe clip comprises two clip segments (3, 5) which are connected to each other by means of at least one hingeable section (7) of the pipe clip, wherein each end (9, 11) of the two clip segments remote from the at least one hingeable section comprises a connection section (13, 15) which connection sections are configured to be connected with each other for connecting the pipe clip around a pipe or a similar object, wherein opposite ends (17, 19) of the two clip segments are connected to the at least one hingeable section, wherein each opposite end comprises, seen from the center line of the pipe clip 1, an outwardly extending flange (21, 23) comprising at least one hole (25a, 25b), wherein the at least one hole of one of the two flanges is alignable by means of the at least one hingeable section with the at least one hole of the other of the two flanges for receiving a fastener element (70; 270) through the two holes for attaching a pipe or a similar object to a support, **characterized in that** the hingeable section comprises at least two hinge portions (7a, 7b) connected to each other by a connecting element (7c), wherein the connecting element has an outwardly extending portion (31) comprising a receiving member (41) for receiving the fastener element.

2. The pipe clip (1) according to claim 1, wherein the connecting element comprises inwardly extending supporting flanges (29) arranged to be positioned against a pipe to be attached to a support.

3. The pipe clip (1) according to claim 1, wherein an inner surface of the receiving member for receiving the fastener element comprises at least one threaded surface portion.

4. The pipe clip (1) according to any of the previous claims, wherein each flange comprises a further hole (27a, 27b) for receiving a fastener element.

5. The pipe clip (1) according to claim 4, wherein in each flange the center lines of the hole and the further hole extend substantially parallel, preferably the center lines define a virtual plane extending substantially perpendicular to the outwardly extending flange.

6. The pipe clip (1) according to any of the previous claims, wherein the pipe segments comprise inwardly directed supporting flanges (43, 45) arranged to be positioned against a pipe to be attached to a support.

7. The pipe clip (1) according to claim 6, wherein in each clip segment the supporting flanges are spaced in a vertical and/or horizontal direction.

8. The pipe clip (1) according to any of the previous claims, wherein an inner surface of each hole for receiving the fastener element comprises at least a threaded inner surface portion.

9. The pipe clip (1) according to any of the previous claims, wherein each connection section comprises a first portion having an outer connection element (13a, 15a) and a second portion having an inner connection element (13b, 15b), wherein for connecting the connection sections the outer connection elements are connected over the inner connection elements.

10. A system (100; 200) comprising a pipe clip (1) according to any of the previous claims and a fastener element (70; 270), preferably the fastener element comprises an outer surface comprising at least a threaded outer surface section.

11. The system (100; 200) according to claim 10, wherein a diameter d1 of the holes through which the fastener element is to be positioned is smaller than the diameter d2 of the fastener element, preferably diameter d1 is 5-20% smaller than diameter d2.

12. The system (100; 200) according to claim 11, wherein the fastener element comprises a standard screw thread section, for example a metric ("M" series threads) screw thread section.

13. A method for attaching a pipe clip (1) according to any of the previous claims by means of a fastener element (70; 270) to a support, preferably a threaded fastener element.

14. The method according to claim 13, wherein the fastener element comprises a standard screw thread section, for example a metric ("M" series threads) screw thread section and/or a diameter d1 of the holes through which the fastener element is to be positioned is smaller than the diameter d2 of the fastener element, preferably diameter d1 is 5-20% smaller than diameter d2.

## Patentansprüche

1. Rohrklemme (1) zum Befestigen eines Rohrs (90) oder eines ähnlichen Objekts an einem Träger, wobei die Rohrklemme zwei Klemmensegmente (3, 5) umfasst, die miteinander durch mindestens einen schwenkbaren Abschnitt (7) der Rohrklemme verbunden sind, wobei jedes Ende (9, 11) der zwei Klemmensegmente, das von dem mindestens einen schwenkbaren Abschnitt entfernt ist, einen Verbindungsabschnitt (13, 15) umfasst, wobei die Verbindungsabschnitte dazu ausgelegt sind, miteinander verbunden zu werden, um die Rohrklemme um ein Rohr oder ein ähnliches Objekt herum zu verbinden, wobei gegenüberliegende Enden (17, 19) der zwei Klemmensegmente mit dem mindestens einen schwenkbaren Abschnitt verbunden sind, wobei jedes gegenüberliegende Ende, von der Mittellinie der Rohrklemme 1 aus gesehen, einen nach außen ragenden Flansch (21, 23) umfasst, der mindestens ein Loch (25a, 25b) aufweist, wobei das mindestens eine Loch eines der zwei Flansche mittels des mindestens einen schwenkbaren Abschnitts mit dem mindestens einen Loch des anderen der zwei Flansche ausrichtbar ist, um ein Befestigungselement (70; 270) durch die zwei Löcher aufzunehmen, um ein Rohr oder ein ähnliches Objekt an einem Träger zu befestigen, **dadurch gekennzeichnet, dass** der schwenkbare Abschnitt mindestens zwei Gelenkteile (7a, 7b) umfasst, die durch ein Verbindungselement (7c) miteinander verbunden sind, wobei das Verbindungselement einen nach außen ragenden Abschnitt (31) aufweist, der ein Aufnahmeelement (41) zum Aufnehmen des Befestigungselements umfasst.

2. Rohrklemme (1) nach Anspruch 1, wobei das Verbindungselement nach innen ragende Stützflansche (29) umfasst, die dazu ausgelegt sind, gegen ein an einem Träger zu befestigendes Rohr positioniert zu werden.

3. Rohrklemme (1) nach Anspruch 1, wobei eine Innenfläche des Aufnahmeelements zum Aufnehmen des Befestigungselements mindestens einen Gewindeflächenabschnitt umfasst.

4. Rohrklemme (1) nach einem der vorhergehenden Ansprüche, wobei jeder Flansch ein weiteres Loch (27a, 27b) zum Aufnehmen eines Befestigungselements umfasst.

5. Rohrklemme (1) nach Anspruch 4, wobei in jedem Flansch die Mittellinien des Lochs und des weiteren Lochs im Wesentlichen parallel verlaufen, wobei die Mittellinien vorzugsweise eine virtuelle Ebene definieren, die sich im Wesentlichen rechtwinklig zu dem nach außen ragenden Flansch erstreckt.

6. Rohrklemme (1) nach einem der vorhergehenden Ansprüche, wobei die Rohrsegmente nach innen gerichtete Stützflansche (43, 45) umfassen, die dazu ausgelegt sind, gegen ein an einem Träger zu befestigendes Rohr positioniert zu werden.

7. Rohrklemme (1) nach Anspruch 6, wobei in jedem Klemmensegment die Stützflansche in vertikaler und/oder horizontaler Richtung beabstandet sind.

8. Rohrklemme (1) nach einem der vorhergehenden Ansprüche, wobei eine Innenfläche jedes Lochs zum Aufnehmen des Befestigungselements mindestens einen Gewindeinnenflächenabschnitt umfasst.

9. Rohrklemme (1) nach einem der vorhergehenden Ansprüche, wobei jeder Verbindungsabschnitt einen ersten Teil mit einem äußeren Verbindungselement (13a, 15a) und einen zweiten Teil mit einem inneren Verbindungselement (13b, 15b) umfasst, wobei zum Verbinden der Verbindungsabschnitte die äußeren Verbindungselemente über die inneren Verbindungselemente verbunden werden.

10. System (100; 200), umfassend eine Rohrklemme (1) nach einem der vorhergehenden Ansprüche und ein Befestigungselement (70; 270), wobei das Befestigungselement vorzugsweise eine Außenfläche umfasst, die mindestens einen Gewindeaußenflächenabschnitt umfasst.

11. System (100; 200) nach Anspruch 10, wobei ein Durchmesser d1 der Löcher, durch die das Befestigungselement zu positionieren ist, kleiner als der Durchmesser d2 des Befestigungselements ist, wobei der Durchmesser d1 vorzugsweise 5-20 % kleiner als der Durchmesser d2 ist.

12. System (100; 200) nach Anspruch 11, wobei das Befestigungselement einen Standard-Schraubgewindeabschnitt, beispielsweise einen metrischen ("M"-Gewinde) Schraubgewindeabschnitt, umfasst.

13. Verfahren zum Befestigen einer Rohrklemme (1) nach einem der vorhergehenden Ansprüche mittels eines Befestigungselements (70; 270) an einem Träger, vorzugsweise einem Gewindebefestigungselement.

14. Verfahren nach Anspruch 13, wobei das Befestigungselement einen Standard-Schraubgewindeabschnitt, beispielsweise einen metrischen Schraubgewindeabschnitt ("M"-Gewinde), umfasst und/oder ein Durchmesser d1 der Löcher, durch die das Befestigungselement zu positionieren ist, kleiner als der Durchmesser d2 des Befestigungselements ist, wobei der Durchmesser d1 vorzugsweise 5-20 % kleiner als der Durchmesser d2 ist.

## Revendications

1. Collier de serrage de tuyau (1) pour fixer un tuyau (90) ou un objet similaire à un support, le collier de serrage de tuyau comprend deux segments de collier de serrage (3, 5) qui sont raccordés l'un à l'autre au moyen d'au moins une section articulable (7) du collier de serrage de tuyau, dans lequel chaque extrémité (9, 11) des deux segments de collier de serrage, éloignée de l'au moins une section articulable, comprend une section de raccordement (13, 15), lesquelles sections de raccordement sont configurées pour être raccordées l'une à l'autre pour raccorder le collier de serrage de tuyau autour d'un tuyau ou d'un objet similaire, dans lequel les extrémités opposées (17, 19) des deux segments de collier de serrage sont raccordées à l'au moins une section articulable, dans lequel chaque extrémité opposée comprend, vue depuis la ligne centrale du collier de serrage de tuyau 1, une bride s'étendant vers l'extérieur (21, 23) comprenant au moins un trou (25a, 25b), dans lequel l'au moins un trou de l'une des deux brides peut être aligné au moyen de l'au moins une section articulable avec l'au moins un trou de l'autre des deux brides pour recevoir un élément de fixation (70 ; 270) à travers les deux trous pour fixer un tuyau ou un objet similaire à un support, **caractérisé en ce que** la section articulable comprend au moins deux parties de charnière (7a, 7b) raccordées l'une à l'autre par un élément de raccordement (7c), dans lequel l'élément de raccordement a une partie s'étendant vers l'extérieur (31) comprenant un organe de réception (41) destiné à recevoir l'élément de fixation.

2. Collier de serrage de tuyau (1) selon la revendication 1, dans lequel l'élément de raccordement comprend des brides de support s'étendant vers l'intérieur (29) agencées pour être positionnées contre un tuyau à fixer à un support.

3. Collier de serrage de tuyau (1) selon la revendication 1, dans lequel une surface intérieure de l'organe de réception destiné à recevoir l'élément de fixation comprend au moins une partie de surface filetée.

4. Collier de serrage de tuyau (1) selon l'une des revendications précédentes, dans lequel chaque bride comprend un trou supplémentaire (27a, 27b) destiné à recevoir un élément de fixation.

5. Collier de serrage de tuyau (1) selon la revendication 4, dans lequel, dans chaque bride, les lignes centrales du trou et du trou supplémentaire s'étendent sensiblement parallèlement, de préférence les lignes centrales définissent un plan virtuel s'étendant sensiblement perpendiculairement à la bride s'étendant vers l'extérieur.

6. Collier de serrage de tuyau (1) selon l'une des revendications précédentes, dans lequel les segments de tuyau comprennent des brides de support dirigées vers l'intérieur (43, 45) agencées pour être positionnées contre un tuyau à fixer à un support.

7. Collier de serrage de tuyau (1) selon la revendication 6, dans lequel dans chaque segment de collier de serrage, les brides de support sont espacées dans une direction verticale et/ou horizontale.

8. Collier de serrage de tuyau (1) selon l'une des revendications précédentes, dans lequel une surface intérieure de chaque trou destiné à recevoir l'élément de fixation comprend au moins une partie de surface intérieure filetée.

9. Collier de serrage de tuyau (1) selon l'une des revendications précédentes, dans lequel chaque section de raccordement comprend une première partie ayant un élément de raccordement extérieur (13a, 15a) et une seconde partie ayant un élément de raccordement intérieur (13b, 15b), dans lequel pour raccorder les sections de raccordement, les éléments de raccordement extérieurs sont raccordés sur les éléments de raccordement intérieurs.

10. Système (100 ; 200) comprenant un collier de serrage de tuyau (1) selon l'une des revendications précédentes et un élément de fixation (70 ; 270), de préférence l'élément de fixation comprend une surface extérieure comprenant au moins une section de surface extérieure filetée.

11. Système (100 ; 200) selon la revendication 10, dans lequel un diamètre d1 des trous à travers lesquels l'élément de fixation doit être positionné est inférieur au diamètre d2 de l'élément de fixation, de préférence le diamètre d1 est inférieur de 5 à 20% au diamètre d2.

12. Système (100 ; 200) selon la revendication 11, dans lequel l'élément de fixation comprend une section de filetage standard, par exemple une section de filetage métrique (filetages de série « M »).

13. Procédé de fixation d'un collier de serrage de tuyau (1) selon l'une des revendications précédentes à un support au moyen d'un élément de fixation (70 ; 270), de préférence un élément de fixation fileté.

14. Procédé selon la revendication 13, dans lequel l'élément de fixation comprend une section de filetage standard, par exemple une section de filetage métrique (filetages de série « M ») et/ou un diamètre d1 des trous à travers lesquels l'élément de fixation doit être positionné est inférieur au diamètre d2 de l'élément de fixation, de préférence le diamètre d1 est inférieur de 5 à 20% au diamètre d2.
